# FASCICULE DE BREVET EUROPEEN

(11) **EP 1 638 786 B1**
(45) Date de publication et mention de la délivrance du brevet: **09.12.2009**
(21) Numéro de dépôt: 04739824.3
(22) Date de dépôt: 11.06.2004
(51) Int. Cl.: B60C 11/01, B60C 11/04

(54) **BANDE DE ROULEMENT COMPORTANT UNE NERVURE SACRIFIEE VENTILEE**
REIFENLAUFFLÄCHE MIT EINER BELÜFTETEN OPFERRIPPE
TIRE TREAD COMPRISING A VENTILATED SACRIFICIAL RIB

(30) Priorité: 16.06.2003 FR 0307231
(43) Date de publication de la demande: 29.03.2006
(73) Titulaire: Société de Technologie Michelin, 63000 Clermont-Ferrand (FR); Michelin Recherche et Technique S.A., 1763 Granges-Paccot (CH)
(72) Inventeur: MERINO LOPEZ, Jose, F-63200 Riom (FR)
(74) Mandataire: Diernaz, Christian
(86) Numéro de dépôt international: PCT/EP2004/006335
(87) Numéro de publication internationale: WO 2004/110790

(56) Documents cités:
- EP-A- 0 625 436
- US-A- 4 480 671
- PATENT ABSTRACTS OF JAPAN vol. 017, no. 576 (M-1499), 20 octobre 1993 (1993-10-20) -& JP 05 169913 A (SUMITOMO RUBBER IND LTD), 9 juillet 1993 (1993-07-09)

## Description

La présente invention a pour objet une amélioration de la bande de roulement des pneumatiques pour véhicules poids lourd ; elle concerne en particulier les bandes de roulement pourvues d'une sculpture formée d'éléments de sculpture sous la forme essentiellement de nervures ou d'une combinaison de blocs et de nervures..

Cette invention est plus particulièrement destinée à être mise en oeuvre pour des pneumatiques à carcasse radiale et destinés aux essieux non moteur des véhicules poids lourd.

De tels pneumatiques comportent le plus souvent une armature de carcasse surmontée radialement à l'extérieur d'une ceinture de sommet elle même surmontée d'une bande de roulement pourvue d'une sculpture formée essentiellement de nervures d'orientation générale circonférentielle. Il est connu notamment par le brevet US 4,480,671, correspondant au préambule de la revendication 1, de pourvoir chacune des zones latérales de cette bande de roulement avec une nervure latérale axialement à l'extérieur de la bande et dont le profil méridien est sensiblement parallèle et radialement intérieur au profil méridien du contour géométrique formant l'enveloppe géométrique de la zone médiane principale de la bande de roulement. Par radialement intérieur, il faut entendre qu'à l'état neuf la nervure latérale comprend une face radialement à l'extérieur qui est en décalage par rapport à la surface de roulement du pneumatique. Au passage dans le contact sur la chaussée, sous l'action de la charge supportée, le matériau constitutif de la bande de roulement est comprimé, ce qui amène la nervure latérale en contact avec la chaussée. Le décalage initial doit être suffisant pour créer des pressions de contact sur cette nervure latérale tout en favorisant le glissement par rapport à la chaussée et ainsi développer une usure préférentiellement sur cette nervure, protégeant ainsi la nervure bord de la bande de roulement de l'usure irrégulière. Il a été constaté que le décalage se maintient tout au long de l'utilisation de la bande de roulement. Le décalage moyen employé est au moins égal à 1 mm et au plus égal à 6 mm ; cette valeur du décalage initial, c'est-à-dire lorsque le pneumatique est neuf, est bien sûr à pondérer par la nature du ou des matériaux constitutifs de la bande de roulement (mélanges de caoutchouc) et par leurs caractéristiques mécaniques en compression.

Grâce à cette disposition, il est possible de maintenir une arête vive aux bords de la bande de roulement, la nervure formée axialement à l'extérieur de chacun desdits bords jouant le rôle d'une nervure dite "sacrifiée" par le fait qu'elle ne participe que très peu à porter la charge du pneumatique. Cette nervure sacrifiée est séparée axialement de la nervure axialement la plus à l'extérieur de la bande par une rainure circonférentielle étroite sensiblement circulaire et de profondeur sensiblement égale à la profondeur des rainures principales de la bande de roulement délimitant les nervures de ladite bande.

Cette structure a montré toute son efficacité en usage ; toutefois, on a constaté que les conditions d'utilisation ont sensiblement évolué et sont aujourd'hui plus dures que par le passé et qu'il en résultait des échauffements à l'intérieur des différents mélanges de caoutchouc de la bande de roulement en particulier au voisinage des extrémités axiales de la ceinture de renforcement du sommet du pneumatique ainsi que dans la région de la nervure sacrifiée. Ces échauffements résultant des sollicitations mécaniques dues aux conditions de roulage conduisent à une consommation d'énergie supplémentaire et sont aussi la cause d'un vieillissement accéléré des mélanges de caoutchouc et d'une diminution des performances de tenue à la fatigue et au déchirement des mélanges de caoutchouc notamment sous l'effet de chocs. L'utilisation de ces pneumatiques sur des véhicules poids lourd roulant dans des pays présentant des températures moyennes élevées est fortement pénalisée.

L'objet de l'invention est une bande de roulement dont les caractéristiques structurelles permettent de maintenir un effet de nervure sacrifiée empêchant le développement de l'usure irrégulière sur les bords des nervures axialement à l'extérieur de la bande de roulement, cette bande étant elle-même pourvue d'une sculpture formée de plusieurs rainures d'orientation générale circonférentielle délimitant des nervures, cette bande ayant en usage un niveau thermique réduit et approprié afin de limiter le phénomène de vieillissement accéléré des mélanges de caoutchouc et cette bande résistant mieux aux chocs contre ses bords.

Une bande de roulement selon l'invention est délimitée axialement par deux faces latérales encadrant une surface de roulement pourvue d'une sculpture formée d'une pluralité d'éléments de relief délimités par des rainures et / ou incisions, cette sculpture comprenant sur chacun de ses bords, c'est-à-dire axialement le plus à l'extérieur de la bande, une nervure d'orientation circonférentielle délimitée axialement à l'intérieur par une rainure de même orientation générale et de profondeur H, (la largeur de la bande de roulement correspond à la distance axiale séparant les points axialement les plus à l'extérieur des deux nervures bord). Cette bande comprend en outre, axialement à l'extérieur de chaque nervure bord, une nervure décalée radialement vers l'intérieur par rapport à la surface externe de contact de la nervure bord voisine d'une distance d non nulle, cette nervure décalée étant séparée de la nervure bord par une rainure s'étendant sensiblement dans l'épaisseur de la bande jusqu'à une profondeur identique ou voisine à la profondeur de la rainure délimitant la nervure bord. Cette nervure décalée radialement vers l'intérieur est destinée à venir en contact avec le sol en cours de roulage ; elle comprend une face radialement à l'extérieur destinée à venir en contact avec le sol et deux faces latérales dont une est située axialement à l'extérieur de la bande de roulement. Par ailleurs, la bande de roulement comprend, de chaque côté où une nervure décalée radialement vers l'intérieur est présente, une pluralité de canaux débouchant sur les faces latérales desdites nervures décalées, ces canaux se prolongeant dans la bande jusqu'à déboucher dans la rainure présente entre la nervure décalée et la nervure bord voisine.

La valeur du décalage **d** dont est décalée la nervure décalée radialement vers l'intérieur est non nulle et telle que la surface externe de cette nervure décalée est en retrait par rapport à la surface extérieure de contact de la nervure bord voisine. Cette valeur **d** est préférentiellement choisie de façon à permettre le contact avec le sol de la nervure décalée avec une pression de contact sensiblement inférieure à la pression de contact existant entre les autres nervures de la bande de roulement et le sol. En règle générale, ce décalage **d** est au moins égal à 1 mm et au plus égal à 6 mm. Comme cela est expliqué dans le brevet US 4480671 la différence de longueur de roulement entre les deux nervures (bord et décalée) conduit à la création d'efforts freineurs sur la nervure décalée et permet ainsi de concentrer l'usure sur cette nervure en protégeant la nervure bord d'une usure irrégulière. Par effort freineur, on entend un effort exercé par le sol sur la nervure, ledit effort s'opposant au mouvement d'avancement du pneumatique.

Les canaux ont préférentiellement une section équivalente à celle d'un disque circulaire de diamètre compris entre 1.5 mm et 4 mm et encore plus préférentiellement entre 2 et 3 mm.

Par ailleurs, la présence de ces canaux permet de réduire la rigidité de compression de la nervure sacrifiée lors de l'écrasement de ladite nervure et donc de réduire la pression de contact, ce qui améliore très sensiblement l'efficacité de cette nervure décalée vis-à-vis de l'usure de la nervure bord voisine tout en assurant une meilleure résistance aux chocs. Par ailleurs, le passage d'air à l'intérieur des canaux est très favorable sur le niveau thermique des nervures décalées qui du fait de leur contact glissant avec le sol sont soumises à des températures particulièrement élevées comparativement à ce qui est observé sur les autres éléments de relief de la sculpture.

Avantageusement, au moins certains des canaux sont prolongés jusqu'à la rainure délimitant axialement à l'intérieur la nervure bord pourvue axialement à l'extérieur avec une nervure décalée, de manière à favoriser les échanges thermiques dans cette partie de la bande de roulement.

La largeur de la rainure séparant une nervure bord d'une nervure décalée est préférentiellement inférieure à 3.5 mm pour des bandes de roulement destinés à des pneumatiques pour véhicules de transport de type poids lourd de manière à permettre le contact entre la nervure décalée et la nervure bord que ce soit sous l'action de la charge portée par le pneumatique ou sous l'action des efforts transversaux en virage afin de limiter la flexion des nervures.

Avantageusement, la distance moyenne séparant deux canaux est comprise entre une fois et douze fois le diamètre équivalent des canaux, et encore plus avantageusement entre deux et six fois le même diamètre pour éviter les risques de fissuration du matériau constituant la bande de roulement. Par diamètre moyen équivalent d'un canal, on entend le diamètre d'un disque circulaire de même surface que le canal considéré. Préférentiellement, le nombre de canaux sera plus important pour des largeurs de nervures sacrifiées plus large.

Bien sûr, les canaux peuvent être orientés de façon à faire, avec la direction axiale, un angle nul ou un angle non nul. Dans ce dernier cas, l'angle est au plus égal à 45°.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue locale d'une bande de roulement selon l'invention comportant une nervure décalée pourvue avec une pluralité de canaux ;

La figure 2 montre la même bande suivant une coupe faite selon un plan II-II ;

La figure 3 montre une variante d'une bande de roulement selon l'invention, les canaux étant prolongés jusqu'à la rainure délimitant une nervure bord ;

La figure 4 montre une variante de répartition des canaux sur la face axialement externe d'une nervure décalée ;

La figure 5 montre en coupe une variante selon l'invention selon laquelle les canaux sont inclinés de manière à s'éloigner de la surface de roulement de la bande en allant axialement vers l'extérieur ;

La figure 6 montre une variante selon l'invention selon laquelle les canaux sont pourvus à leur extrémité externe avec un dispositif favorisant la circulation d'air.

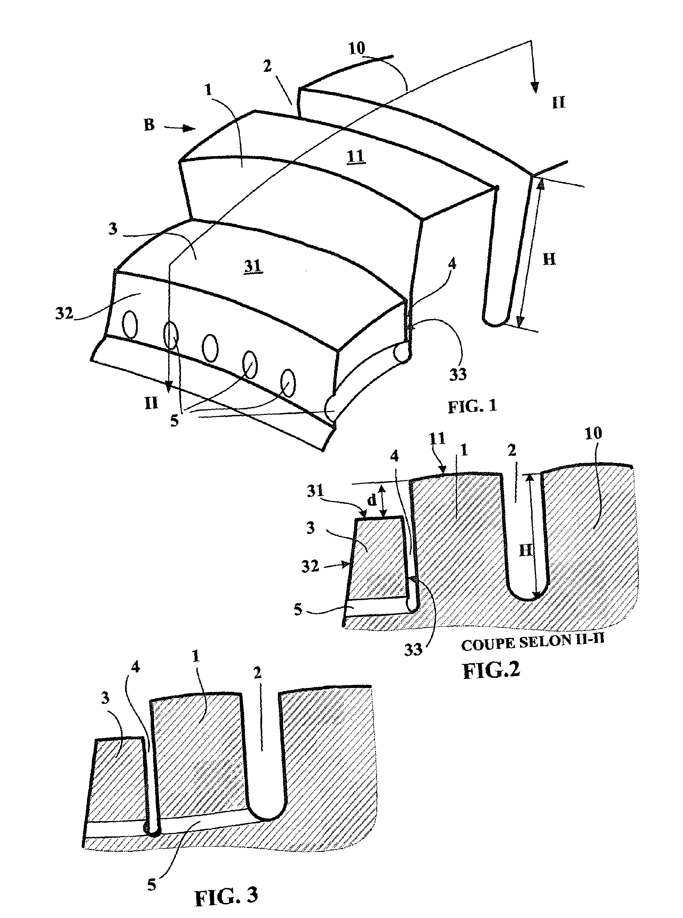

La figure 1 montre une vue locale d'une bande de roulement B selon l'invention, pour un pneumatique de dimension 315/80 R 22.5, comportant une sculpture formée par une pluralité de nervures principales 1, 10 orientées dans la direction circonférentielle, ces nervures principales 1, 10 étant séparées les unes des autres par des rainures principales 2 d'orientation circonférentielle et de profondeur H et de même largeur. Sur la figure 1 on a représenté un bord de la bande avec une nervure bord 1 pourvue axialement vers l'extérieur de la bande avec une nervure décalée 3 de largeur égale à 7.8 mm, cette nervure décalée 3 étant séparée de la nervure bord par une incision 4 de largeur inférieure à 1 mm et à la largeur des rainures principales 2. Cette incision 4 se prolonge dans l'épaisseur de la bande de roulement jusqu'à sensiblement la même profondeur que les rainures principales.

Le décalage **d**, égal dans le cas présenté à 1.4 mm, entre la face de contact 11 de la nervure bord 1 formant une partie de la surface de roulement de la bande et la face externe 31 de la nervure décalée 3 est tel que, lors de l'écrasement de la bande sous l'action de la charge portée par un pneumatique équipé avec ladite bande, cette face de externe 31 vient également en contact avec le sol. Cet effet est recherché dès l'utilisation d'une bande neuve voire même après une usure initiale représentant une faible proportion de l'usure totale admissible pour la bande (on considère qu'une usure équivalente à 10% de la durée d'utilisation de la bande est une approximation de cette usure initiale).

Par ailleurs, une pluralité de canaux 5 ont été moulés sous la surface externe 31 de la nervure décalée 3. Ces canaux 5 s'étendent entre les faces axialement à l'extérieur 32 et axialement intérieure 33 de la nervure décalée 3. De cette manière, l'incision 4 entre la nervure décalée 3 et la nervure bord 1 communique avec la face axialement externe 32 de la nervure décalée.

Tous ces canaux 5 ont une section de forme sensiblement circulaire de diamètre égal à 3 mm et sont distants les uns des autres d'une distance moyenne égale à 8.2 mm (soit 2.7 fois diamètre des canaux).

La figure 2 montre cette même bande vue suivant une coupe réalisée dans un plan radial, c'est-à-dire un plan passant par l'axe de rotation du pneumatique pourvu de cette bande. Cette figure 2 et toutes les autres figures 3 à 6 emploient les mêmes références pour indiquer des éléments comparables.

Dans le cas présenté, les canaux 5 sont situés dans des plans perpendiculaires à la direction longitudinale de la bande (ces plans sont également des plans radiaux) et sont disposés de manière à être orientés sensiblement dans la direction axiale (c'est-à-dire la direction de la largeur de la bande de roulement ou encore de l'axe de rotation du pneumatique).

L'élément décalé 3 a sa surface externe 31 en retrait par rapport à la surface externe 11 de la nervure 1 d'une quantité d appropriée pour permettre le contact avec la chaussée en usage. Ce décalage ou retrait se maintient pendant toute la durée d'utilisation du pneumatique pourvu de cette bande de roulement.

Dans une autre variante montrée à la figure 3 en coupe dans un plan radial, les canaux 5 sont prolongés jusqu'à la rainure principale 2 adjacente à la nervure bord 1. Cette disposition assure de façon encore plus sensible un refroidissement de la nervure décalée 3 par le passage d'air de l'extérieur de la bande vers la rainure (ou dans l'autre sens).

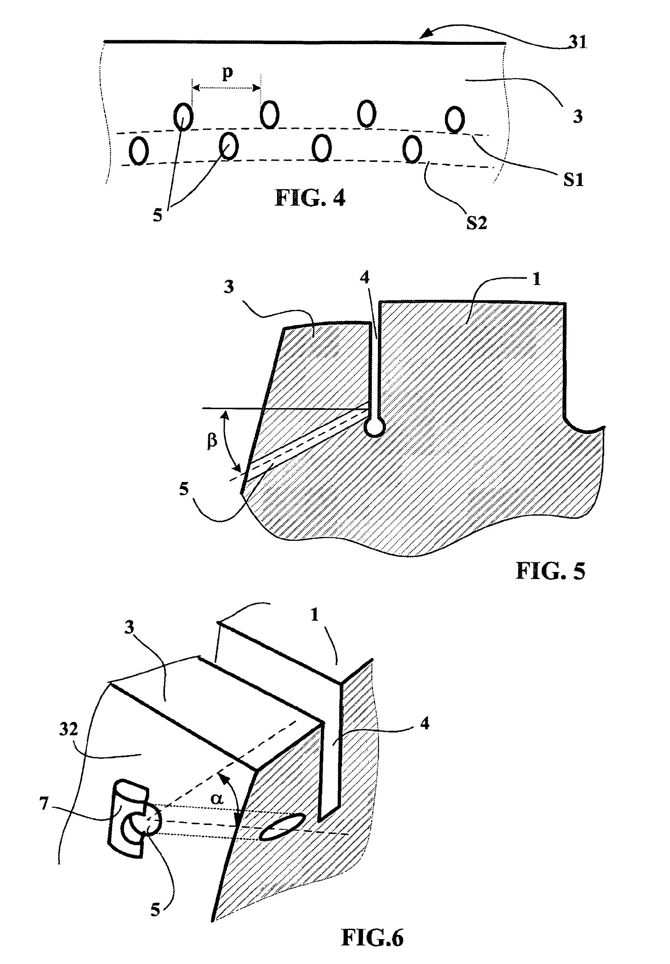

Ce flux d'air peut encore être amélioré comme cela est visible avec la variante montrée à la figure 6 selon laquelle, outre le fait que les canaux 5 sont inclinés de manière à former un angle α non nul et inférieur à 45° avec l'axe de rotation du pneumatique pourvu d'une telle bande, il est également prévu un relief 7 sur la face extérieure 32 de la nervure décalée 3 au voisinage de chaque sortie de canal 5. Ce relief 7 est formé préférentiellement sur une partie du pourtour de chaque canal 5 afin de former une sorte d'ailette pour favoriser la circulation d'air dans chaque canal 5 et augmenter le flux d'air assurant ainsi une ventilation forcée de la nervure décalée 3 (ce relief peut être employé que les canaux soient ou non inclinés).

Dans une autre variante selon l'invention (figure 4), on place des canaux 5 sur deux surfaces cylindriques concentriques S1 et S2 à l'intérieur d'un élément décalé 3 ; les différents canaux 5 étant placés en quinconce avec une distance P entre canaux comprise entre une fois et quatre fois le diamètre équivalent de section des canaux 5. De cette façon, on réduit sensiblement le risque de cassure dans les matériaux au voisinage des canaux 5. Par diamètre équivalent d'un canal, on entend le diamètre d'un disque circulaire de même surface que la section du canal prise dans un plan perpendiculaire à la direction de la plus grande dimension dudit canal.

Dans une autre variante (figure 5), les canaux 5 sont situés dans un plan radial (c'est-à-dire un plan passant par l'axe de rotation) et inclinés d'un angle P par rapport à la direction axiale repérée X sur la figure 5 de manière à faire bénéficier de l'effet de ventilation, et donc de refroidissement, les parties de la bande de roulement situées radialement à l'intérieur de la nervure décalée 3 (c'est-à-dire à une profondeur supérieure à la profondeur H de l'incision 4 délimitant la nervure décalée 3).

Par ailleurs et afin d'amplifier encore le flux d'air circulant dans les canaux, il est possible de modifier les géométries desdits canaux au moins au voisinage des faces sur lesquelles ils débouchent (par exemple par la présence de sections élargies).

D'une manière générale, une bande selon l'invention et les variantes décrites ici ne présentent pas de difficulté de moulage : on peut pour cela employer le procédé décrit dans le document US 6408910.

L'invention n'est pas limitée aux exemples décrits et représentés et diverses modifications peuvent y être apportées sans sortir de son cadre. En particulier, les nervures et rainures de la sculpture peuvent présenter des tracés non nécessairement alignés dans la direction circonférentielle (par exemple en formant des zigzags) ou encore être en zigzag dans la direction de la profondeur de la bande de roulement

Enfin, ce qui a été présenté avec des nervures s'applique également à des blocs de sculpture disposés selon des rangées s'étendant dans la direction circonférentielle.

## Revendications

1. Bande de roulement (B) délimitée axialement par deux faces latérales encadrant une surface de roulement, cette bande étant pourvue sur sa surface de roulement d'une sculpture formée d'une pluralité d'éléments de relief (1, 10) délimités par des rainures et / ou incisions (2), cette sculpture comprenant sur chacun de ses bords, c'est-à-dire axialement le plus à l'extérieur de la bande, une nervure bord (1) continue d'orientation circonférentielle délimitée axialement à l'intérieur par une rainure (2) de même orientation générale et de profondeur H, cette bande comprenant en outre, axialement à l'extérieur de chaque nervure bord (1), une nervure sacrifiée ayant une face radialement à l'extérieur décalée (3), par rapport à la surface externe de contact (11) de la nervure bord (1) voisine, radialement vers l'intérieur d'une distance d au moins égale à 1 mm et au plus égale à 6 mm et telle que cette nervure sacrifiée vient en contact avec la chaussée pendant le roulage, cette nervure sacrifiée (3) étant séparée de la nervure bord (1) par une rainure (4) de profondeur identique ou voisine à la profondeur H de la rainure (2) délimitant la nervure bord (1), la bande de roulement étant **caractérisée en ce qu'**elle comprend, de chaque côté où une nervure sacrifiée (3) est formée, une pluralité de canaux (5) débouchant sur les faces latérales de la bande, ces canaux (5) se prolongeant dans la bande jusqu'à déboucher dans la rainure (4) entre la nervure décalée (3) et la nervure bord (1) voisine.

2. Bande de roulement selon la revendication 1 2**caractérisée en ce que** les canaux (5) ont un diamètre équivalent égal au diamètre d'une surface de section équivalente à celle d'un disque circulaire, ledit diamètre équivalent étant compris entre 1.5 et 4.0 mm.

3. Bande de roulement selon l'une des revendications 1 ou 2 **caractérisée en ce que** la distance moyenne entre deux canaux (5) est comprise entre deux fois et six fois le diamètre équivalent des canaux (5).

4. Bande de roulement selon l'une des revendications 1 à 3 **caractérisée en ce que** chacun des canaux (5) n'est pas dans un plan perpendiculaire à la direction longitudinale de la bande et fait un angle α au plus égal à 45° avec la direction transversale de la bande.

5. Bande de roulement selon l'une des revendications 1 à 4 **caractérisée en ce que** la largeur moyenne de la rainure (4) séparant une nervure bord (1) d'une nervure décalée (3) est au plus égale à 3.5 mm.

6. Bande de roulement selon l'une des revendications 1 à 5 **caractérisée en ce que** au moins certains des canaux (5) formés dans une nervure décalée sont prolongés jusqu'à la rainure (2) délimitant axialement à l'intérieur la nervure bord (1) voisine de ladite nervure décalée (3)

7. Bande de roulement selon l'une des revendications 1 à 6 **caractérisée en ce qu'**un relief est prévu sur la surface extérieure de la nervure sacrifiée au voisinage de chaque canal afin de favoriser le flux d'air à l'intérieur dudit canal lors du roulage.

8. Bande de roulement selon l'une des revendications 1 à 7 **caractérisée en ce que** les canaux sont disposés en quinconce, la distance séparant lesdits canaux étant comprise entre une et quatre fois le diamètre des canaux.

9. Pneumatique pourvu d'une bande de roulement selon l'une des revendications 1 à 8 et **caractérisé en ce qu'**il est destiné à équiper un essieu avant d'un véhicule de type poids lourd.

## Claims

1. A tread (B) defined axially by two lateral faces surrounding a running surface, this tread being provided on its running surface with a tread pattern formed by a plurality of elements in relief (1, 10) which are defined by grooves and/or incisions (2), this tread pattern comprising on each of its edges, that is to say axially furthest to the outside of the tread, an edge rib (1) of circumferential orientation defined axially to the inside by a groove (2) of the same general orientation and of depth H, this tread furthermore comprising, axially to the outside of each edge rib (1), a sacrificed rib (3) having a face radially to the outside offset, relative to the outer contact surface (11) of the neighbouring edge rib (1), radially towards the inside by a distance d at least equal to 1 mm and at most equal to 6 mm, such that this sacrificed rib come into contact with the ground during travel, this sacrificed rib (3) being separated from the edge rib (1) by a groove (4) of a depth identical or close to the depth H of the groove (2) defining the edge rib (1), the tread being **characterised in that** it comprises, on either side where a sacrificed rib (3) is formed, a plurality of channels (5) opening on to the lateral faces of the tread, these channels (5) being extended in the tread until they open into the groove (4) between the offset rib (3) and the neighbouring edge rib (1).

2. A tread according to Claim 1, **characterised in that** the channels (5) have an equivalent diameter equal to the diameter of a surface of section equivalent to that of a circular disc, said equivalent diameter being between 1.5 and 4.0 mm.

3. A tread according to one of Claims 1 to 2, **characterised in that** the average distance between two channels (5) is between twice and six times the equivalent diameter of the channels (5).

4. A tread according to one of Claims 1 to 3, **characterised in that** each of the channels (5) is not in a plane perpendicular to the longitudinal direction of the tread and forms an angle α at most equal to 45° with the transverse direction of the tread.

5. A tread according to one of Claims 1 to 4, **characterised in that** the average width of the groove (4) separating an edge rib (1) from an offset rib (3) is at most equal to 3.5 mm.

6. A tread according to one of Claims 1 to 5, **characterised in that** at least some of the channels (5) formed in an offset rib are extended as far as the groove (2) defining axially to the inside the neighbouring edge rib (1) of said offset rib (3).

7. A tread according to one of Claims 1 to 6, **characterised in that** a relief is provided on the outer surface of the sacrificed rib in the vicinity of each channel in order to promote the flow of air within said channel upon rolling.

8. A tread according to one of Claims 1 to 7, **characterised in that** the channels are arranged staggered, the distance between said channels being between one and four times the diameter of the channels.

9. A tyre provided with a tread according to one of Claims 1 to 8 and **characterised in that** it is intended to be fitted on a front axle of a vehicle of heavy-vehicle type.

## Patentansprüche

1. Laufstreifen (B), der axial durch zwei Seitenflächen begrenzt wird, die eine Lauffläche umranden, wobei dieser Streifen auf seiner Lauffläche mit einem Profilmuster versehen ist, das durch mehrere Profilelemente (1, 10) gebildet wird, die durch Nuten und/oder Einschnitte (2) begrenzt werden, wobei dieses Profilmuster an jedem seiner Ränder, das heißt axial am weitesten nach außen des Streifens, eine um den Umfang ausgerichtete durchgehende Randrippe (1) aufweist, die axial nach innen durch eine Nut (2) mit gleicher allgemeiner Ausrichtung und mit einer Tiefe H begrenzt wird, wobei dieser Streifen des Weiteren axial nach außen von jeder Randrippe (1) eine Opferrippe mit einer bezüglich der äußeren Kontaktfläche (11) der benachbarten Randrippe (1) axial nach außen liegenden, um einen Abstand d von mindestens 1 mm und höchstens 6 mm radial nach innen versetzten Fläche (3), derart, dass diese Opferrippe während des Rollens mit der Straße in Kontakt kommt, aufweist, wobei diese Opferrippe (3) durch eine Nut (4) mit einer Tiefe, die mit der Tiefe H der die Randrippe (1) begrenzenden Nut (2) identisch oder ihr ähnlich ist, von der Randrippe (1) getrennt ist, wobei dieser Laufstreifen **dadurch gekennzeichnet ist, dass** er auf jeder Seite, auf der eine Opferrippe (3) gebildet ist, mehrere Kanäle (5) aufweist, die in den Seitenflächen des Streifens münden, wobei diese Kanäle (5) in den Streifen verlängert sind, bis sie zwischen der versetzten Rippe (3) und der benachbarten Randrippe (1) in der Nut (4) münden.

2. Laufstreifen nach Anspruch 1, **dadurch gekennzeichnet, dass** die Kanäle (5) einen Durchmesser aufweisen, der gleich dem Durchmesser einer Querschnittsfläche ist, die zu der einer kreisförmigen Scheibe äquivalent ist, wobei der äquivalente Durchmesser zwischen 1,5 und 4,0 mm liegt.

3. Laufstreifen nach Anspruch 1 oder 2, **dadurch gekennzeichnet, dass** der mittlere Abstand zwischen zwei Kanälen (5) zwischen dem Zwei- und Sechsfachen des äquivalenten Durchmessers der Kanäle (5) liegt.

4. Laufstreifen nach einem der Ansprüche 1 bis 3, **dadurch gekennzeichnet, dass** keiner der Kanäle (5) in einer senkrecht zur Längsrichtung des Streifens verlaufenden Ebene liegt und jeder der Kanäle einen Winkel α von höchstens 45° zu der Querrichtung des Streifens bildet.

5. Laufstreifen nach einem der Ansprüche 1 bis 4, **dadurch gekennzeichnet, dass** die mittlere Breite der Nut (4), die eine Randrippe (1) von einer versetzten Rippe (3) trennt, höchstens 3,5 mm beträgt.

6. Laufstreifen nach einem der Ansprüche 1 bis 5, **dadurch gekennzeichnet, dass** mindestens bestimmte der Kanäle (5), die in einer versetzten Rippe ausgebildet sind, bis zu der Nut (2) verlängert sind, die die der versetzten Rippe (3) benachbarte Randrippe (1) axial innen begrenzt.

7. Laufstreifen nach einem der Ansprüche 1 bis 6, **dadurch gekennzeichnet, dass** auf der Außenfläche der Opferrippe in der Nähe jedes Kanals ein Profil vorgesehen ist, um beim Rollen den Luftstrom im Inneren des Kanals zu unterstützen.

8. Laufstreifen nach einem der Ansprüche 1 bis 7, **dadurch gekennzeichnet, dass** die Kanäle versetzt angeordnet sind, wobei der die Kanäle trennende Abstand ein- bis viermal so groß ist wie der Durchmesser der Kanäle.

9. Luftreifen, der mit einem Laufstreifen nach einem der Ansprüche 1 bis 8 versehen ist, **dadurch gekennzeichnet, dass** er an einer Vorderachse eines Lastwagens angebracht werden soll.
